Europäisches Patentamt

(19) European Patent Office

Office européen des brevets

(11) EP 0 885 935 A1

(12) EUROPEAN PATENT APPLICATION

(43) Date of publication:
23.12.1998 Bulletin 1998/52

(51) Int. Cl.$^6$: C08L 95/00
// (C08L95/00, 23:08),
(C08L95/00, 53:02),
(C08L95/00, 9:08)

(21) Application number: 98110428.4

(22) Date of filing: 08.06.1998

(84) Designated Contracting States:
AT BE CH CY DE DK ES FI FR GB GR IE IT LI LU
MC NL PT SE
Designated Extension States:
AL LT LV MK RO SI

(30) Priority: 17.06.1997 US 877103

(71) Applicant:
EXXON RESEARCH AND ENGINEERING
COMPANY
Florham Park, New Jersey 07932-0390 (US)

(72) Inventors:
• Puzic, Olga
Sarnia, Ontario, N7S 4W9 (CA)
• Williamson, Kenneth E.
Sarnia, Ontario, N7F 5M1 (CA)

(74) Representative:
Somers, Harold Arnold et al
ESSO Engineering (Europe) Ltd.
Patents & Licences
Mailpoint 72
Esso House
Ermyn Way
Leatherhead, Surrey KT22 8XE (GB)

(54) Asphalt compositions and process for low temperature paving applications

(57)      The present invention relates to novel polymer modified asphalt-diluent oil binder compositions having enhanced low service temperature performance properties and the method of making them and to road paving asphalts containing them.

EP 0 885 935 A1

## Description

FIELD OF THE INVENTION

The present invention relates to polymer modified asphalt paving compositions.

BACKGROUND OF THE INVENTION

Asphalt is a viscoelastic semi-solid bituminous material derived from the distillation residue of crude petroleum. Because it has good adhesive and weathering characteristics, it is widely used as a binder or cement for stone or rock aggregate in pavement construction. If, because of the nature of the crude oil distilled, the asphalt is too soft at ambient temperature, a harder product may be manufactured, for example, by extraction of the lighter components with liquid propane or other solvents, or by oxidizing by air blowing at a elevated temperature. However, these manufacturing processes can produce asphalts that are too brittle at low temperature, and result in excessive cracking in cold weather. Another means of stiffening soft asphalt to extend its useful temperature rage is by blending with suitable polymers. Polymers can reduce the tendency of an asphalt pavement to creep and rut in warm weather by increasing its high temperature viscoelastic stiffness. Thus, polymers have been added which permit the use of, in some instances, softer grades of asphalt to reduce cracking in cold weather without risking excessive softening in hot weather.

However, compositions having both enhanced low and high temperature service properties were not disclosed. Typically, the addition of polymers to asphalts has not been successful in extending the low temperature service (i.e., cracking temperature) properties below -39°C while maintaining high temperature performance of at least 52°C. Applicants' invention addresses these deficiencies.

SUMMARY OF THE INVENTION

The present invention provides for a polymer modified asphalt binder composition having enhanced high and low temperature performance, comprising a storage stable blend of:

-   a petroleum based diluent oil, selected from the group consisting of reprocessed motor oils, gasoline engine oils and industrial oils, in an amount sufficient to maintain the low temperature performance of the polymer modified asphalt of below -39°C to -54°C and maintain high temperature performance of at least 52°C;

-   a straight run asphalt having a penetration range of from 20-500 dmm;

-   a polymer selected from elastomers selected from the group consisting of styrene-butadiene-styrene, styrene-butadiene diblock, butyl rubber, styrene butadiene latex and EPDM, and plastomers selected from the group consisting of ethylene vinyl acetate (EVA), ethylene metacrylate (EMA) or ethylene butylacrylate (EBA).

The present invention also provides for the composition of claim 1 wherein the polymer is present in the range of from 1-8 wt% polymer to total composition.

The present invention may suitably comprise, consist or consist essentially of the elements disclosed herein and includes the products produced by the processes disclosed herein.

DETAILED DESCRIPTION OF THE INVENTION

This invention provides for new polymer modified asphalt binder and paving compositions, and their methods of preparation and use. The compositions possess significantly enhanced viscoelastic properties in low temperature applications while maintaining the high temperature performance properties of the asphalt binders. Currently, resistance of polymer modified binders to cracking at low temperatures has been limited to temperatures down to between about minus 32°C and minus 39°C (see Table 1, row 6). It has been discovered that a polymer modified asphalt binder system having decreased low temperature stiffness (limiting stiffness temperature) and enhanced resistance to low temperature cracking, having adequate rutting and improved fatigue properties can be produced by combining a blend of asphalt and polymer and petroleum based diluent oil, preferably elastomers and plastomers. Diluent oils can be added before, during or after polymer addition to the asphalt. The amount of the oil can be varied depending on the temperatures at which the binder will be used, typically more oil for lower applicaiton temperatures.

The petroleum based diluent oils suitable for use include paraffinic, naphthenic or aromatic petroleum oil having viscosity lower than starting asphalt, e.g., having viscosity rage of 100-250,000 cSt at 40°C. These include, for example, paraffinic oils such as Canthus, reprocessed motor oils, gas engine oils, and industrial oils that do not substantially alter the flash point (less than 250°C) and volatility requirements (less than 1% weight loss on Rolling Thin Film Oven residue test, ASTM D2872-88) of the finished binder. The amount of diluent oil can be varied to affect the lower limit of the application service temperature. Typical amounts range from 1 wt% to 50 wt%, preferably from 1 wt% to 40 wt%, more preferably from 2 wt% to 35 wt% and most preferably from 5 wt% to 30 wt% of oil to polymer modified asphalt. Greater amounts will typically be added to harder straight run asphalts (e.g., 60/70 penetration grade) than to softer straight run asphalts (e.g., 300/400 penetration grade), with amounts in the 10 to 50 wt% range not uncommon.

Asphalt is a bituminous material remaining after or prepared from the distillation of crude oil. The asphalts used in the present invention may be obtained from a variety of sources of vacuum residua and may be classified by their penetration grade (measured according to ASTM D-5). Typically, the asphalt will have a nominal atmospheric boiling point of at least 350°C and more typically above 440°C. The asphalt is suitably a straight run asphalt of a penetration range from 20-500 dmm at 25°C (ASTM D-5).

The polymer is preferably an elastomer, such as styrene-butadiene-styrene (linear or radial triblock), styrene-butadiene diblock, styrene-butadiene rubber, styrene-butadiene latex, butyl rubber or EPDM, or plastomer such as EVA, EMA or EBA. Typically polymer is present in the blend of asphalt and oil in amounts from 1-6 wt%, preferably 2-6 wt%, more preferably 2-4 wt%. The type and amount of polymer added can be used to influence the rutting temperature, higher polymer content gives better rutting resistance.

This invention has application in polymer modified asphalt systems in which high temperature (at least 52°C) and low temperature (from below minus 39°C to about minus 54°C) service performance of the binder and polymer modified asphalt paving material is required. Addition of diluent oils to polymer modified asphalts as disclosed herein enhances the low temperature service performance as measured by limiting stiffness temperature, according to the test procedure of the American Association of State Highway and Transportation Officials (AASHTO) Provisional Test Procedure (TP) 1-93 (as published in the AASHTO Provisional Standards Book, June 1996), in comparison to unmodified binders of similar penetration. Enhanced fatigue resistance is demonstrated by lower temperature at which the binder reaches $G^* \times \sin \delta = 5000$ kPa  (as measured by AASTO TP5-93).

Desirably the oil, polymer and asphalt described herein will be combined in a amounts sufficient to produce a resulting binder composition having a rutting temperature range of from about 52°C to 82°C, preferably 58°C to 76°C. Additionally, it is desired that the binder have a cracking temperature range of -40°C to -54°C and a fatigue temperature rage of from about -15°C to +20°C.

The asphalt, polymer and diluent oil are combined at a sufficient temperature to produce a mixture or blend typically about 190°C. Stirring, mixing or agitation, using a high shear mixing device are suitable blending methods. The method used will influence the amount of time needed to combine the asphalt, oil and polymer but in any event should be sufficient to distribute the polymer and oil throughout the asphalt. Times may rage from 0.5 to 24 hours, according to the method selected as known in the art.

Depending on the application, flux (e.g., original asphalt) may be added to the polymer modified asphaltic binder composition. The amount of flux to be added will depend on the viscosity of the starting materials and the desired viscosity of the end product and the particular application and is readily determinable by one skilled in the art in view of the teachings herein.

When it is used as a pavement binder, asphalt is normally mixed with aggregate typically in a ratio of about 5 wt% asphalt to 95 wt% aggregate, at a temperature at which the asphalt is sufficiently fluid to coat the aggregate particles, typically about 150°C. Aggregate is known to those skilled in the art and suitably is any particulate material used in road paving applications for combination with binder. Any suitable material typically, locally available materials may be used; e.g., rock, stone granite, shells or other suitable high modulus material. The paving composition is made by forming the binder according to the methods disclosed above and mixing the binder with the aggregate or rock. The paving material may be applied to a paving surface according to methods and under conditions known to those skilled in the art to be effective to produce a road paving surface.

SUPERPAVE™ criteria (as described in the June 1996 edition of the AASHTO Provisional Standards Book) can be used to define the Maximum and Minimum Pavement service temperature conditions under which the binder must perform. SUPERPAVE™ is a trademark of Strategic Highway Research Program (SHRP) and is the term used for new binder specifications as per AASHTO MP-1 standard. Maximum Pavement Temperature (or "application" or "service" temperature) is the temperature at which the asphalt binder will resist rutting (also called Rutting Temperature). Minimum Pavement Temperature is the temperature at which the binder will resist cracking. Low temperature properties of asphalt binders were measured by Bending Beam Rheometer (BBR). According to SUPERPAVE™ criteria, the temperature at which a maximum creep stiffness (S) of 300 MPa at 60s loading time is reached, is the Limiting Stiffness Temperature, LST. Minimum Pavement Temperature at which the binder will resist cracking (also called Cracking Temperature) is equal to LST-10°C. Table 1 compares LST (°C) and cracking of various conventional and polymer modified binders with the Low Temperature Binders (LTB) of the present invention. Table also contains Rutting Temperature values for various binders. These binders can be used as basestocks for polymer modification.

The following illustrates the invention:

Table 1 shows a example in which rutting temperature of (LTB1 + 3% SB latex) is equivalent to rutting temperature of conventional Cold Lake, penetration grade of 200/300 with enhanced limiting stiffness temperature (-22.5C for Cold Lake, penetration grade of 200/300 versus -31.2°C for LTB1 + 3% SB latex). Table 1 also shows another example in which rutting temperature of (LTB2 + 7% EVA) is equivalent to rutting temperature of conventional Cold Lake asphalt (penetration grade of 150/200) with enhanced limiting stiffness temperature (-20°C for Cold Lake, penetration grade of 150/200 vs -35.1°C for LTB2 + 7% EVA).

EP 0 885 935 A1

TABLE 1

SUPERPAVE Minimum Pavement Temperature for typical and ultra-low temp binders

| Asphalt type pen grade + polymer %, type | Limiting Stiffness Temperature (°C)[1] | Cracking Temperature, (°C)[1a] | Rutting Temperature (°C)[2] | Flash Point, °C ASTM D92 (230°C max) | Rolling Thin Film Oven Test Mass % loss ASTM D2872 (1% max.) |
|---|---|---|---|---|---|
| Cold Lake 300/400 | -25 | -35 | 51 | 270 | 0.60 |
| Cold Lake 200/300 | -22.5 | -32.5 | 56 | | |
| Cold Lake 150/200 | -20 | -30 | 61 | | |
| Cold Lake 85/100 | -16.5 | -26.5 | 69 | | |
| Cold Lake 300/400 + (5% EVA)[a] | -22 | -32 | 73 | | |
| LTB1[b] | -30 | -40 | | 250 + | 0.60 |
| LTB2[c] | -36.1 | -46.1 | | 250 + | 0.56 |
| LTB3[d] | -44.3 | -54.3 | | 250 + | 0.44 |
| LTB1 + (3% SB latex)[e] | -31.2 | -41.2 | 57 | 250 + | 0.68 |
| LTB2 + (7% EVA) | -35.1 | -45.1 | 63 | 250 + | 0.67 |

Notes:

1. Temperature at which creep stiffness S = 300 MPa @ 60s loading time

1a. LST-10°C = cracking temperature

2. Temperature at which $G^*/\sin \delta$ = 2200 Pa @ 10rad/s (Rolling Thin Film aged sample)

a. Ethylene Vinyl Acetate co-polymer (AT 1240A, 10 melt index/12% vinyl acetate content)

b. LTB1: Cold Lake 300/400 + 10% Canthus 1000

c. LTB2: Cold Lake 300/400 + 20% Canthus 1000

d. LTB3: Cold Lake 300/400 + 30% Canthus 1000

e. Styrene-butadiene polymer (64% in water suspension)

**Claims**

1. A polymer modified asphalt binder composition having enhanced low temperature performance, comprising a storage stable blend of:

   - a petroleum based diluent oil, selected from the group consisting of reprocessed motor oils, gasoline engine oils and industrial oils, in an amount sufficient to maintain the low temperature performance of the polymer modified asphalt in a range of below -39°C to -54°C and to maintain high temperature performance of at least 52°C;

   - a straight run asphalt having a penetration range of from 20-500 dmm;

   - a polymer selected from elastomers selected from the group consisting of styrene-butadiene-styrene, styrene-butadiene diblock, butyl rubber, styrene butadiene latex and EPDM, and plastomer selected from the group consisting of EVA, EMA, EBA.

2. The composition of claim 1 in which oil is present in an amount in a range of from 1 wt% to 50 wt% oil to asphalt.

3. The composition of claim 1 or claim 2 wherein the polymer is present in the range of from 1-7 wt% polymer to total composition.

4. A method of enhancing the low temperature performance of a road paving polymer modified asphalt, comprising:

   - blending a polymer modified asphalt with a petroleum based diluent oil selected from the group consisting of reprocessed motor oils, gasoline engine oils and industrial oils, in an amount sufficient to achieve a low temperature performance of the polymer modified asphalt in a rage of below -39°C to -54°C and to maintain high temperature performance of at least 52°C, wherein the oil is present in the rage of from 1-50 wt% of oil to asphalt, wherein the asphalt is a straight run asphalt having a penetration range of 20-500 dmm and wherein the polymer is an elastomer selected from the group consisting of styrene-butadiene-styrene, styrene-butadiene diblock, butyl rubber, styrene butadiene latex, EPDM, or plastomer selected from the group consisting of EVA, EMA, EBA.

5. The method of claim 4, further comprising combining the polymer modified asphalt with a sufficient amount of aggregate to form a road paving material.

6. A road paving asphalt composition, comprising:

   - aggregate in the amount of from 93 to 96 wt%; and

   - the balance by weight of a polymer modified asphalt binder containing an unsulfonated blend of a petroleum based diluent oil, selected from the group consisting of reprocessed motor oils, gasoline engine oils and industrial oils, in an amount sufficient to maintain low temperature performance of the polymer modified asphalt in a range of below -40°C to -54°C and to maintain high temperature performance of at least 52°C in the ratio of from 1-50 wt% of oil to asphalt; a straight run asphalt having a penetration range of from 20-500 dmm; and a polymer selected from the group consisting of elastomers and plastomers.

7. The composition of claim 6 wherein the plastomers are selected from the group consisting of ethylene vinyl acetate and ethylene methylacrylate and the elastomers are selected from the group consisting of styrene-butadiene-styrene, styrene-butadiene diblock, butyl rubber, styrene butadiene latex, and EPDM.

**European Patent Office**

**EUROPEAN SEARCH REPORT**

Application Number

EP 98 11 0428

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 547 399 A (FUJIHARA DECEASED YOSHIKI ET AL) 15 October 1985 <br> * claims * | 1-4 | C08L95/00 <br> //(C08L95/00, <br> 23:08), <br> (C08L95/00, <br> 53:02), <br> (C08L95/00, <br> 9:08) |
| X | EP 0 380 384 A (PAVAGE ET ASPHALTES) 1 August 1990 <br> * page 2, line 6 - page 2, line 56 * <br> * page 3, line 50 - page 4, line 48 * | 1-4 | |
| X | EP 0 174 795 A (EXXON FRANCE) 19 March 1986 <br> * claims * <br> * page 3, line 21 - page 4, line 14 * <br> * page 7, line 12 - page 8, paragraph 2 * | 1-4 | |
| X | FR 2 716 681 A (COLAS SA) 1 September 1995 <br> * page 4, line 15 - page 5, line 20 * <br> * claims * | 1-4 | |
| X | EP 0 422 315 A (NYNAES NV) 17 April 1991 <br> * page 2, line 51 - page 4, line 25 * <br> * claims * | 1-7 | TECHNICAL FIELDS SEARCHED (Int.Cl.6) <br><br> C08L |
| X | WO 88 08866 A (INTERCHIMICA SPA) 17 November 1988 <br> * claims * <br> * page 4, line 6 - page 5, line 15 * | 1-7 | |
| X | US 5 618 132 A (FOGG ROLAND ET AL) 8 April 1997 <br> * column 4, paragraph 1-6 * | 1-7 | |

The present search report has been drawn up for all claims

| Place of search | Date of completion of the search | Examiner |
|---|---|---|
| THE HAGUE | 17 September 1998 | Leroy, A |

EPO FORM 1503 03.82 (P04C01)